# EUROPEAN PATENT APPLICATION

(11) **EP 3 306 072 A1**
(43) Date of publication of application: **11.04.2018**
(21) Application number: 16799642.0
(22) Date of filing: 16.03.2016
(51) Int. Cl.: F02M 55/02

(54) **FUEL PIPE CONNECTING HEAD AND FUEL PIPE**

(30) Priority: 26.05.2015 JP 2015106139
(71) Applicant: Sanoh Industrial Co., Ltd., Tokyo 150-0013 (JP)
(72) Inventor: TADOKORO, Hayato, Koga-shi Ibaraki 306-0041 (JP); OZAWA, Yuji, Koga-shi Ibaraki 306-0041 (JP); KIZAKI, Masahisa, Koga-shi Ibaraki 306-0041 (JP)
(74) Representative: Grünecker Patent- und Rechtsanwälte PartG mbB
(86) International application number: PCT/JP2016/058380
(87) International publication number: WO 2016/189934

(57) **Abstract**

Provided is a connecting head of a fuel pipe connected to a fuel distribution tube which distributes and supplies fuel to a plurality of fuel injection devices, the connecting head including: an enlarged-diameter section having an outer circumferential surface enlarged in diameter toward a tip of the connecting head; and a reduced-diameter section located on the tip side of the enlarged-diameter section and having an outer circumferential surface reduced in diameter toward the tip. A convex curved surface section having a convex curved shape and a concave curved surface section having a concave curved shape are formed on an outer circumferential surface of the reduced-diameter section, the convex curved surface section being brought into pressure contact with the fuel distribution tube, the concave curved surface section being located on the enlarged-diameter section side of the convex curved surface section and continuing to the convex curved surface section.

## Description

### Technical Field

The present invention relates to a connecting head of a fuel pipe connected to a fuel distribution tube that distributes and supplies fuel to a plurality of fuel injection devices, and a fuel pipe.

### Background Art

In a direct injection engine or the like, a high-pressure fuel compressed by a high-pressure pump is distributed and supplied to a plurality of fuel injection devices, using a fuel distribution and supply device (a fuel injection rail). In the fuel distribution and supply device, a fuel pipe is connected to the high-pressure pump and the fuel distribution tube. A connecting head for being connected to the fuel distribution tube is provided at a tip portion of the fuel pipe.

The connecting head includes an enlarged-diameter section enlarged in diameter toward the tip side, and a reduced-diameter section located on the tip side of the enlarged-diameter section and reduced in diameter toward the tip side. The reduced-diameter section includes a conical (tapered) tapered section, and a spherical convex curved surface section continuing to the tapered section (see, for example, Patent Literature 1). When connecting the connecting head to the fuel distribution tube, a nut latched on the enlarged-diameter section of the connecting head is screwed into the fuel distribution tube. Then, the connecting head is pressed and crushed against the seating surface of the fuel distribution tube. The connecting head and the fuel distribution tube are sealed by the crushed surface.

### Citation List

### Patent Literature

Patent Document 1: Japanese Patent No. 3995526

### Summary of Invention

### Technical Problem

In such a fuel distribution and supply device, it is preferable to connect the fuel distribution tube and the fuel pipe so that the connecting head is not inclined with respect to the fuel distribution tube. However, when it is not possible to sufficiently secure the arrangement space, or when the skill of the operator is not sufficient, it is difficult to connect the fuel distribution tube and the fuel pipe so that the connecting head is not inclined with respect to the fuel distribution tube. Therefore, there is a desire to connect the fuel distribution tube and the fuel pipe even in a state in which the connecting head is inclined with respect to the fuel distribution tube.

Meanwhile, in order to maintain the sealing performance between the connecting head and the fuel distribution tube, even if the connecting head is inclined with respect to the fuel distribution tube, when connecting the connecting head and the fuel distribution tube, it is necessary to set an area in which the connecting head collapses to be substantially the same as a case where the connecting head is not inclined with respect to the fuel distribution tube.

However, in the conventional connecting head, when the connecting head and the fuel distributing pipe are connected to each other in a state in which the connecting head is inclined with respect to the fuel distributing pipe, not only the convex curved surface but also a conical tapered section is crushed continued to the convex curved surface. If the tapered section is also crushed, the crushed area becomes larger than a case where only the convex portion is crushed. As a result, the pressure applied to the collapsed surface decreases, and the sealing performance between the connecting head and the fuel distribution tube deteriorates.

Here, it is conceivable to reduce a taper angle of the tapered section so that the tapered section is not crushed. However, if the taper angle of the tapered section is made small, since the thickness of the connecting head becomes thinner and the strength decreases, this case is not realistic.

Thus, an object of an aspect of the present invention is to provide a connecting head of a fuel pipe, and the fuel pipe that can suppress degradation of sealing performance with a fuel distribution tube when inclined with respect to the fuel distribution tube.

### Solution to Problem

According to an aspect of the present invention, there is provided a connecting head of a fuel pipe connected to a fuel distribution tube which distributes and supplies fuel to a plurality of fuel injection devices, the connecting head including: an enlarged-diameter section having an outer circumferential surface enlarged in diameter toward a tip of the connecting head; and a reduced-diameter section located on the tip side of the enlarged-diameter section and having an outer circumferential surface reduced in diameter toward the tip. A convex curved surface section having a convex curved shape and a concave curved surface section having a concave curved shape are formed on an outer circumferential surface of the reduced-diameter section, the convex curved surface section being brought into pressure contact with the fuel distribution tube, the concave curved surface section being located on the enlarged-diameter section side of the convex curved surface section and continuing to the convex curved surface section.

The convex curved surface section may be formed in a spherical shape having a center point on a tube axis of the connecting head.

When a distance from the center point to the convex curved surface section is defined as AR, and when a distance from the center point to a point on which a surface passing through a boundary between the convex curved surface section and the concave curved surface section intersects with the tube axis is defined as A, in a direction from the center point toward a tip side of the connecting head along the tube axis, A/AR may be 0 or more and less than 1.

In the cross section passing through the tube axis of the connecting head, when a point of the convex curved surface section abutting against the fuel distribution tube is defined as an abutment point in a state in which the tube axis of the fuel distribution tube and the tube axis of the connecting head coincide with each other, when a tangential line at the abutment point is defined as a first tangential line, and when a tangential line of the concave curved surface section parallel to the first tangential line is defined as a second tangential line, the distance between the first tangential line and the second tangential line may be 0 mm or more and 1.14 mm or less.

A fuel pipe according to another aspect of the invention includes the connecting head according to any one aspect. In the fuel pipe according to an aspect of the present invention, since the connecting head is provided, it is possible to prevent the sealing performance between the fuel distribution tube and the connecting head from degrading when the connecting head is inclined with respect to the fuel distribution tube.

### Advantageous Effects of Invention

According to an aspect of the present invention, it is possible to suppress degradation of the sealing performance with the fuel distribution tube when inclined with respect to the fuel distribution tube.

### Brief Description of Drawings

FIG. 1 is a plan view illustrating a part of a fuel distribution and supply device.
FIG. 2 is a cross-sectional view illustrating a connecting part between a fuel distribution tube and a fuel pipe.
FIG. 3 is a cross-sectional view illustrating a part of the fuel pipe.
FIG. 4 is a diagram illustrating a dimensional proportion of a connecting head.
FIG. 5 is a diagram illustrating a dimensional proportion of a connecting head.
FIG. 6 is a diagram illustrating an inclination angle range of a connecting head with respect to a fuel distribution tube in an embodiment.
FIG. 7 is a cross-sectional view illustrating a connecting head of a comparative example.
FIG. 8 is a diagram illustrating an inclination angle range of a connecting head with respect to a fuel distribution tube in a comparative example.

### Description of Embodiments

Embodiments of a fuel distribution and supply device according to an embodiment will be described below with reference to the drawings. In each drawing, the same or corresponding elements are denoted by the same reference numerals, and repeated description will not be provided.

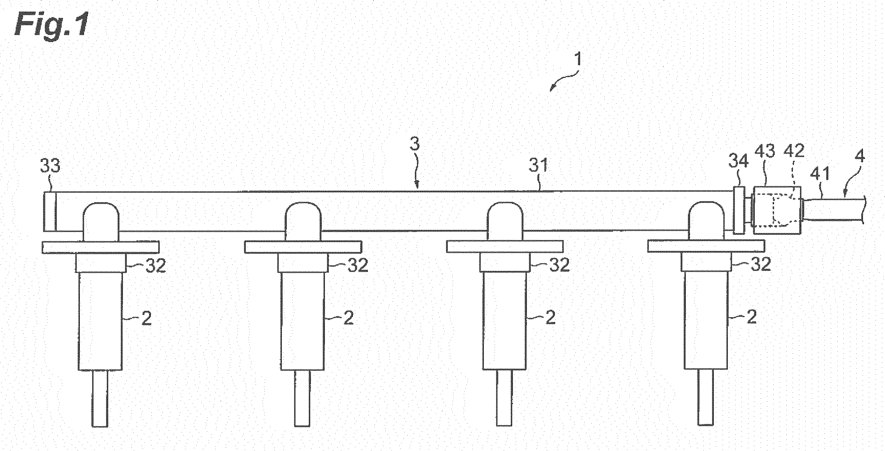

FIG. 1 is a plan view illustrating a part of a fuel distribution and supply device. As illustrated in FIG. 1, a fuel distribution and supply device 1 distributes and supplies high-pressure fuel compressed by a high-pressure pump (not illustrated) to a fuel injection device 2 provided to correspond to each cylinder of an engine (not illustrated). The fuel distribution and supply device 1 is also called a fuel injection rail or the like.

The fuel distribution and supply device 1 includes a fuel distribution tube 3 which distributes and supplies the high-pressure fuel to a plurality of fuel injection devices 2, and a fuel pipe 4 which supplies the high-pressure fuel compressed by the high-pressure pump to the fuel distribution tube 3.

The fuel distribution tube 3 includes a tube section 31 and a plurality of cup sections 32.

In order to supply fuel to the plurality of fuel injection devices 2, the tube section 31 stores the fuel pumped from the high-pressure pump in a high pressure state. The tube section 31 is formed in a circular pipe shape extending linearly along a cylinder row direction (a crank shaft direction) of an engine. An inner circumferential surface 31a of the tube section 31 forms a flow path of fuel. The tubular shape of the tube section 31 does not necessarily need to be a circular tubular shape extending linearly, but the tube section 31 may have various shapes. The material of the tube section 31 can be, for example, metal or resin.

The tube section 31 includes a lid section 33 fixed to one end portion of the tube section 31 to close the one end portion of the tube section 31, a connecting section 34 fixed to the other end portion of the tube section 31 and connected to the fuel pipe 4. The lid section 33 and the connecting section 34 can be fixed to the tube section 31, for example, by brazing. The one end portion of the tube section 31 refers to an end portion on an opposite side to the fuel pipe 4 among both end portions of the tube section 31. The other end portion of the tube section 31 refers to an end portion on the fuel pipe 4 side among both end portions of the tube section 31.

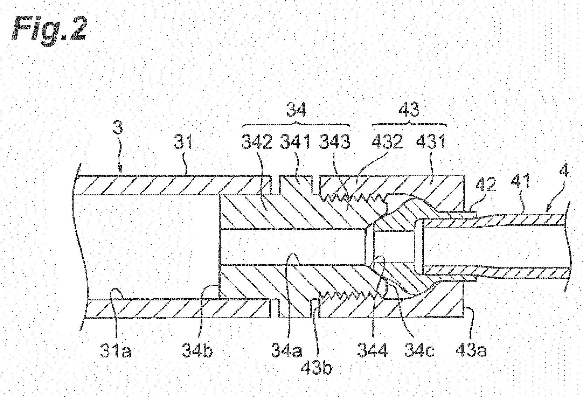

FIG. 2 is a cross-sectional view illustrating a connecting part between the fuel distribution tube and the fuel pipe. As illustrated in FIGS. 1 and 2, the connecting section 34 is formed in a circular pipe shape. The inner circumferential surface 34a of the connecting section 34 is an inner circumferential surface of the fuel distribution tube 3 and forms a flow path of fuel. The connecting section 34 includes a flange section 341, a fixing section 342, and a screw section 343.

The flange section 341 is located in the central portion of the connecting section 34 in the direction of the tube axis, and is formed into a flange shape enlarged in diameter to the radially outer side. The fixing section 342 is located on the one end surface 34b side of the connecting section 34 with respect to the flange section 341 and is fixed to the tube section 31. The one end surface 34b is an end surface on the opposite side to the fuel pipe 4 among both end surfaces of the connecting section 34 in the direction of the tube axis. The screw section 343 is located on the other end surface 34c side of the connecting section 34 with respect to the flange section 341, and is connected to the fuel pipe 4. The other end surface 34c is an end surface on the fuel pipe 4 side among both end surfaces of the connecting section 34 in the direction of the tube axis. On the outer circumferential surface of the screw section 343, a male screw for being connected with the fuel pipe 4 is engraved. A seating surface 344 to which the fuel pipe 4 is crimped is formed on the inner circumferential surface of the screw section 343.

The seating surface 344 is formed in a funnel shape enlarged in diameter toward the other end surface 34c, and a cross section passing through the tube axis of the connecting section 34 is a straight line. The inclination angle of the seating surface 344 with respect to the tube axis of the connecting section 34 can be, for example, 60°.

The cup section 32 is provided to correspond to the fuel injection device 2, and supplies the fuel stored in the tube section 31 to the fuel injection device 2. The cup section 32 is fixed to the tube section 31, and holds the fuel injection device 2 so that the space between the cup section 32 and the fuel injection device 2 becomes airtight. The cup section 32 can be fixed to the tube section 31, for example, by brazing.

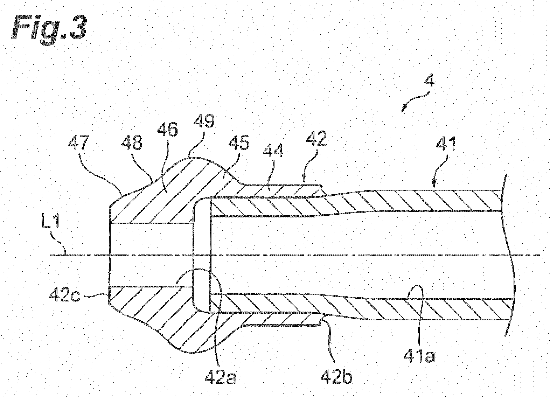

FIG. 3 is a cross-sectional view illustrating a part of a fuel pipe. As illustrated in FIGS. 1 to 3, the fuel pipe 4 includes a tube section 41, a connecting head 42, and a connecting nut 43.

The tube section 41 is disposed between the high-pressure pump and the fuel distribution tube 3, and sends the high-pressure fuel compressed by the high-pressure pump to the fuel distribution tube 3. The inner circumferential surface 41a of the tube section 41 forms a flow path of fuel. The material of the tube section 41 may be, for example, metal or resin.

The connecting head 42 is connected to the fuel distribution tube 3. The connecting head 42 is formed in a circular pipe shape. The inner circumferential surface 42a of the connecting head 42 forms a flow path of fuel. The connecting head 42 is fixed to the tube section 41. The connecting head 42 can be fixed to the tube section 41, for example, by inserting the connecting head 42 into the tube section 41 and by brazing the inner circumferential surface 42a of the connecting head 42 and the outer circumferential surface of the tube section 41.

The connecting head 42 includes a same diameter section 44, an enlarged-diameter section 45, and a reduced-diameter section 46. The same diameter section 44, the enlarged-diameter section 45, and the reduced-diameter section 46 are formed in this order from the one end surface 42b side of the connecting head 42 toward the other end surface 42c side. The one end surface 42b is an end surface on the side opposite to the tip of the connecting head 42 (the opposite side to the fuel distribution tube 3) among both end surfaces of the connecting head 42 in the direction of the tube axis L1. The tip of the connecting head 42 is a tip of the connecting head 42 on the fuel distribution tube 3 side. The other end surface 42c is an end surface of the connecting head 42 on the tip side (the fuel distribution tube 3 side) among both end surfaces of the connecting head 42 in the direction of the tube axis L1.

The same diameter section 44 is located at the end portion on the one end surface 42b side of the connecting head 42. The outer circumferential surface of the same diameter section 44 has the same diameter over the entire regions of the connecting head 42 in the direction of the tube axis L1.

The enlarged-diameter section 45 is located on the other end surface 42c side (the tip side of the connecting head 42) of the same diameter section 44. The outer circumferential surface of the enlarged-diameter section 45 is enlarged in diameter toward the other end surface 42c side (the tip side of the connecting head 42). That is, the outer circumferential surface of the enlarged-diameter section 45 is formed in a substantially funnel shape which expands toward the other end surface 42c side. The enlarged-diameter section 45 may be adjacent to the same diameter section 44 or may be spaced apart from the same diameter section 44 by insertion of another part between the same diameter section 44 and the enlarged-diameter section 45. Further, the outer circumferential surface of the enlarged-diameter section 45 may have any shape as long as the diameter enlarges toward the other end surface 42c side.

The reduced-diameter section 46 is located on the other end surface 42c side (the tip side of the connecting head 42) of the enlarged-diameter section 45. The outer circumferential surface of the reduced-diameter section 46 reduces toward the other end surface 42c side (the tip side of the connecting head 42). That is, the outer circumferential surface of the reduced-diameter section 46 is formed in a substantially funnel shape that narrows toward the other end surface 42c side. The reduced-diameter section 46 may be adjacent to the enlarged-diameter section 45 or may be spaced apart from the enlarged-diameter section 45 by insertion of another part between the enlarged-diameter section 45 and the reduced-diameter section 46.

On the outer circumferential surface of the reduced-diameter section 46, a convex curved surface section 47, a concave curved surface section 48, and a second convex curved surface section 49 are formed. The convex curved surface section 47, the concave curved surface section 48, and the second convex curved surface section 49 are formed in this order from the other end surface 42c side toward the one end surface 42b side.

The convex curved surface section 47 is an outer circumferential surface of the reduced-diameter section 46 (connecting head 42). The convex curved surface section 47 is located at the end portion of the reduced-diameter section 46 on the other end surface 42c side. The convex curved surface section 47 is pressed against the seating surface 344 of the fuel distribution tube 3 when connecting the fuel distribution tube 3 and the connecting head 42. The convex curved surface section 47 is formed in a convex curved surface shape. That is, in the cross section passing through the tube axis L1 of the connecting head 42, the convex curved surface section 47 is formed in a convex curve. Therefore, in the convex curved surface section 47, the outer circumferential surface of the connecting head 42 bulges. In the present embodiment, the convex curved surface section 47 is formed in a spherical shape having a center point on the tube axis L1 of the connecting head 42. That is, in the cross section passing through the tube axis L1 of the connecting head 42, the convex curved surface section 47 is formed in an arc centered on a point on the tube axis L1 of the connecting head 42.

The concave curved surface section 48 is an outer circumferential surface of the reduced-diameter section 46 (connecting head 42). The concave curved surface section 48 is located on the enlarged-diameter section 45 side (the one end surface 42b side) of the convex curved surface section 47. The concave curved surface section 48 is formed in a concave curved surface continued to the convex curved surface section 47. That is, in the cross section passing through the tube axis L1 of the connecting head 42, the concave curved surface section 48 is formed as a concave curve continued to the convex curved surface section 47. Therefore, in the concave curved surface section 48, the outer circumferential surface of the connecting head 42 is recessed. In the cross section passing through the tube axis L1 of the connecting head 42, the concave curved surface section 48 may be an arcuate concave curve. In addition, a conical (tapered) part is not formed between the convex curved surface section 47 and the concave curved surface section 48, and the convex curved surface section 47 and the concave curved surface section 48 are continuous. That is, in the cross section passing through the tube axis L1 of the connecting head 42, no straight line is formed between the convex curved surface section 47 and the concave curved surface section 48.

The second convex curved surface section 49 is an outer circumferential surface of the reduced-diameter section 46 (connecting head 42). The second convex curved surface section 49 is located on the enlarged-diameter section 45 side (the one end surface 42b side) of the concave curved surface section 48. The second convex curved surface section 49 is formed in a convex curved surface shape continued to the concave curved surface section 48. That is, in the cross section passing through the tube axis L1 of the connecting head 42, the second convex curved surface section 49 is a convex curve continued to the concave curved surface section 48. Therefore, in the second convex curved surface section 49, the outer circumferential surface of the connecting head 42 bulges. In the cross section passing through the tube axis L1 of the connecting head 42, the second convex curved surface section 49 may be an arcuate convex curve. In addition, a conical (tapered) part is not formed between the concave curved surface section 48 and the second convex curved surface section 49, and the concave curved surface section 48 and the second convex curved surface section 49 are continuous. That is, in the cross section passing through the tube axis L1 of the connecting head 42, no straight line is formed between the concave curved surface section 48 and the second convex curved surface section 49.

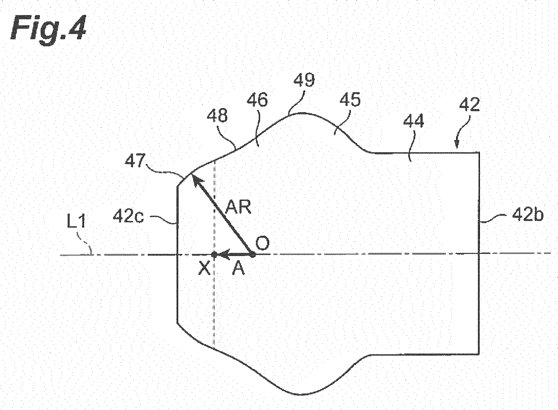

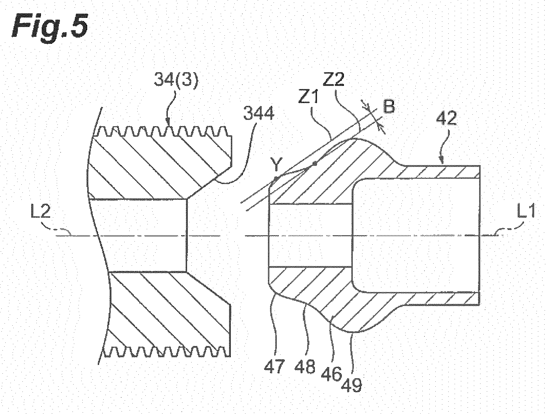

Here, the dimensional proportion of the connecting head 42 will be described with reference to FIGS. 4 and 5.

FIG. 4 is a diagram illustrating the dimensional proportion of the connecting head. As illustrated in FIG 4, the center point of the convex curved surface section 47 is defined as O, the distance from the center point O to the convex curved surface section 47 is defined as AR, and a point on which a surface passing through the boundary between the convex curved surface section 47 and the concave curved surface section 48 intersects with the tube axis L1 of the connecting head 42 is defined as X. Further, in a direction from the center point O toward the other end surface 42c side (the tip side of the connecting head 42) of the connecting head 42 along the tube axis L1 of the connecting head 42, the distance from the center point O to the point X is defined as A. The center point of the convex curved surface section 47 is a curvature center of the convex curved surface section 47 formed in a spherical shape and is a point on the tube axis L1. The distance from the center point O to the convex curved surface section 47 is the radius of curvature of the convex curved surface section 47 formed in a spherical shape. In this case, A/AR is preferably 0 or more and less than 1 (0 ≤ A/AR < 1), and is more preferably 0 or more and 0.6 or less (0 ≤ A/AR ≤ 0.6).

When A/AR becomes less than 0 (minus), that is, when the point X is located on a side closer to the one end surface 42b of the connecting head 42 than the center point O, stress concentration is likely to occur at the tip portion of the connecting head 42. Thus, there is a possibility of insufficiency of the strength of the connecting head 42. Therefore, by setting A/AR to be equal to or larger than 0, it is possible to alleviate the stress concentration occurring at the tip portion of the connecting head 42. Therefore, the strength of the connecting head 42 can be sufficiently secured. Meanwhile, when A/AR exceeds 1, the connecting head 42 is likely to come into contact with the fuel distribution tube 3 in a portion other than the convex curved surface section 47. Further, when A = AR, that is, when A/AR is 1, since the inflection point of the outer circumferential surface of the convex curved surface section 47 and the outer circumferential surface of the concave curved surface section 48 becomes the tip of the convex curved surface section 47, it is not possible to form the convex curved surface section 47. Therefore, by setting A/AR to be less than 1, it is possible to suppress the connecting head 42 from coming into contact with the fuel distribution tube 3 in a portion other than the convex curved surface section 47. Further, by setting A/AR to 0.6 or less, the maximum inclination angle can be made larger.

FIG. 5 is a diagram illustrating the dimensional proportion of the connecting head. As illustrated in FIG. 5, in a cross section passing through the tube axis L1 of the connecting head 42, in a state in which the tube axis L2 of the fuel distribution tube 3 and the tube axis L1 of the connecting head 42 coincide with each other, the point of the convex curved surface section 47 that abuts on the seating surface 344 of the fuel distribution tube 3 is defined as an abutment point Y Further, in a cross section passing through the tube axis L1 of the connecting head 42, a tangential line at the abutment point Y is defined as a first tangential line Z1. Further, in a cross section passing through the tube axis L1 of the connecting head 42, the tangential line of the concave curved surface section 48 parallel to the first tangential line Z1 is defined as a second tangential line Z2. In this case, the distance B between the first tangential line Z1 and the second tangential line Z2 is preferably 0 mm or more and 1.14 mm or less (0 mm ≤ B ≤ 1.14 mm).

By setting the distance B to 0 mm or more, the concave curved surface section 48 can be formed. Meanwhile, by setting the distance B to 1.14 mm or less, there is a possibility that the thickness of the reduced-diameter section 46 becomes too thin and the strength of the reduced-diameter section 46 becomes insufficient.

The connecting nut 43 connects and fixes the connecting head 42 of the fuel pipe 4 to the connecting section 34 of the fuel distribution tube 3. The connecting nut 43 is formed in a nut shape, and a hole into which the same diameter section 44 is inserted is formed on the inner side of the connecting nut 43 in the radial direction. The connecting nut 43 includes a hooking section 431 and a screw section 432.

The hooking section 431 is located at the end portion on the one end surface 43a side of the connecting nut 43. One end surface 43a of the connecting nut 43 is an end surface on the opposite side to the fuel distribution tube 3 among both end surfaces of the connecting nut 43. The inner circumferential surface of the hooking section 431 is reduced in diameter toward the one end surface 43a so that the minimum diameter of the hooking section 431 is smaller than the maximum diameter of the enlarged-diameter section 45. Further, the inner circumferential surface of the hooking section 431 is hooked to the enlarged-diameter section 45 of the connecting head 42 from the one end surface 42b side of the connecting head 42.

The screw section 432 is located at the end portion on the other end surface 43b side of the connecting nut 43. The other end surface 43b of the connecting nut 43 is an end surface on the fuel distribution tube 3 side among both end surfaces of the connecting nut 43. A female screw screwed into the screw section 343 of the connecting section 34 is engraved on the inner circumferential surface of the screw section 432.

When the screw section 432 of the connecting nut 43 is fastened to the screw section 343 of the connecting section 34, the hooking section 431 pulls the enlarged-diameter section 45 toward the connecting section 34. As a result, the convex curved surface section 47 is pressed against the seating surface 344, and the fuel distribution tube 3 and the fuel pipe 4 are connected and fixed to each other.

Here, a comparative example in which the concave curved surface section 48 is not formed on the connecting head will be described.

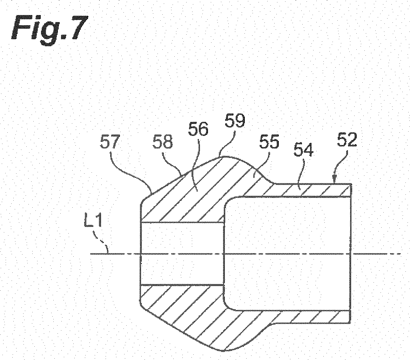

FIG. 7 is a cross-sectional view illustrating a connecting head of a comparative example. As illustrated in FIG. 7, the connecting head 52 of the comparative example is the same as the connecting head 42 of the embodiment except that the concave curved surface section 48 is not formed. The connecting head 52 of the comparative example includes a same diameter section 54 and an enlarged-diameter section 55 similar to the same diameter section 44 and the enlarged-diameter section 45 of the embodiment, and a reduced-diameter section 56 corresponding to the reduced-diameter section 46. In the reduced-diameter section 56, a convex curved surface section 47 and a second convex curved surface section 49 similar to the convex curved surface section 47 and the second convex curved surface section 49 of the embodiment are formed, and a conical section 58 is formed instead of the concave curved surface section 48 of the embodiment,.

In the cross section passing through the tube axis L1 of the connecting head 52, the outer circumferential surface of the conical section 58 is formed in a straight line. That is, in the cross section passing through the tube axis L1 of the connecting head 52, the convex curved surface section 57 and the second convex curved surface section 59 are connected to each other by a straight line.

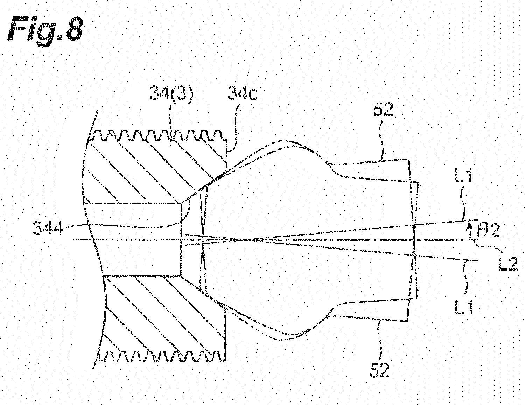

FIG. 8 is a diagram illustrating the inclination angle range of the connecting head with respect to the fuel distribution tube in the comparative example. As illustrated in FIGS. 7 and 8, in the comparative example, when the connecting head 52 is connected to the connecting section 34 of the fuel distribution tube 3, the convex curved surface section 57 is pressed and crushed against the seating surface 344. At this time, when increasing the inclination angle of the connecting head 52 with respect to the fuel distribution tube 3, the surface crushed by being pressed against the seating surface 344 extends beyond the convex curved surface section 57 to the conical section 58. Here, a maximum inclination angle of the connecting head 52 with respect to the fuel distribution tube 3 which can crush only the convex curved surface section 57 is defined as θ2.

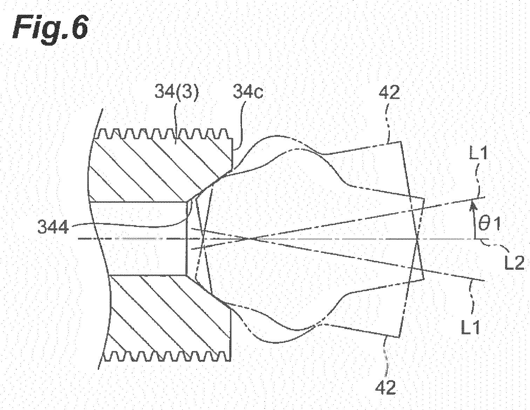

FIG. 6 is a diagram illustrating an inclination angle range of the connecting head with respect to the fuel distribution tube in the embodiment. As illustrated in FIGS. 3 and 6, in the embodiment, when the connecting head 42 of the embodiment is connected to the connecting section 34 of the fuel distribution tube 3, the convex curved surface section 47 is pressed and crushed against the seating surface 344.

At this time, since the outer circumferential surface of the concave curved surface section 48 is formed as a concave curve in the cross section passing through the tube axis L1 of the connecting head 42, as compared with the connecting head 52 of the comparative example, the range of the convex curved surface section 47 in the direction of the tube axis L1 is long. Therefore, even if the inclination angle of the connecting head 42 with respect to the fuel distribution tube 3 is made to be larger than that of the comparative example, only the convex curved surface section 47 can be crushed. That is, when the maximum inclination angle of the connecting head 42 with respect to the fuel distribution tube 3 which can crush only the convex curved surface section 47 is defined as 01, the maximum inclination angle θ1 of the embodiment becomes larger than the maximum inclination angle 02 of the comparative example. For this reason, in the connecting head 42 of the embodiment, even if the connecting head 42 is more greatly inclined with respect to the fuel distribution tube 3 than the connecting head 52 of the comparative example, it is possible to maintain the sealing performance between the connecting head 42 and the fuel distribution tube 3.

In this way, in this embodiment, the concave curved surface section 48 continued to the convex curved surface section 47 is formed on the side of the convex curved surface section 47 closer to the enlarged-diameter section 45. Therefore, the range of the convex curved surface section 47 in the direction of the tube axis L1 of the connecting head 42 becomes longer than the case of the connecting head 52 of the comparative example having no concave curved surface section. As a result, even if the inclination angle of the connecting head 42 with respect to the fuel distribution tube 3 is made to be larger than the conventional case, only the convex curved surface section 47 can be crushed. As a result, it is possible to suppress degradation of the sealing performance with the fuel distribution tube 3 when inclined with respect to the fuel distribution tube 3.

Further, since the convex curved surface section 47 has a spherical shape, it is possible to further improve the sealing performance between the seating surface 344 and the connecting head 42 when the connecting head 42 is inclined with respect to the fuel distribution tube 3.

Further, by setting A/AR to 0 or more and less than 1, it is possible to suppress the contact with the seating surface 344 of the fuel distribution tube 3 in a portion other than the convex curved surface section 47, while alleviating the concentration of stress generated at the tip portion of the connecting head 42.

Further, by setting the distance B between the first tangential line Z1 and the second tangential line Z2 to 0 mm or more and 1.14 mm or less, it is possible to prevent the thickness of the reduced-diameter section 46 from becoming too thinner to cause insufficiency of strength of the reduced-diameter section 46, while enabling the formation of the concave curved surface section 48.

Although the preferred embodiments of the present invention have been described above, the present invention is not limited to the above-described embodiments. For example, the connecting head connected to the high-pressure pump of the fuel pipe 4 may also have the same configuration as the connecting head 42 of the above embodiment. Further, the connecting pipe may be directly connected to a joint pipe (not illustrated) connected to a fuel pump (not illustrated) of a fuel tank (not illustrated), rather than being connected to the high-pressure pump.

### Reference Signs List

1 ... fuel distribution and supply device, 2 ... fuel injection device, 3 ... fuel distribution tube, 31 ... pipe section, 31a ... inner circumferential surface, 32 ... cup section, 33 ... lid section, 34 ... connecting section, 34a ... inner circumferential surface, 34b ... one end surface, 34c ... the other end surface, 341 ... flange section, 342 ... fixing section, 343 ... screw section, 344 ... seating surface, 4 ... fuel pipe, 41 ... pipe section, 41a ... inner circumferential surface, 42 ... connecting head, 42a ... inner circumferential surface, 42b ... one end surface, 42c ... the other end surface, 43 ... connecting nut, 43a ... one end surface, 43b ... the other end surface, 431 ... hooking section, 432 ... screw section, 44 ... same diameter section, 45 ... enlarged-diameter section, 46 ... reduced-diameter section, 47 ... convex curved surface section, 48 ... concave curved surface section, 49 ... second convex curved surface section, 52 ... connecting head, 54 ... same diameter section, 55 ... enlarged-diameter section, 56 ... reduced-diameter, 57 ... convex curved surface section, 58 ... conical section, 59 ... second convex curved surface section, L1 ... tube axis of connecting head, L2 ... tube axis of fuel distribution tube (connecting section), A ... distance, AR ... distance, X ... point, Y ... abutment point, Z1 ... first tangential line, Z2 ... second tangential line, θ1 ... maximum inclination angle, 02 ... maximum inclination angle.

## Claims

1. A connecting head of a fuel pipe connected to a fuel distribution tube which distributes and supplies fuel to a plurality of fuel injection devices, the connecting head comprising:
an enlarged-diameter section having an outer circumferential surface enlarged in diameter toward a tip of the connecting head; and
a reduced-diameter section located on the tip side of the enlarged-diameter section and having an outer circumferential surface reduced in diameter toward the tip,
wherein a convex curved surface section having a convex curved shape and a concave curved surface section having a concave curved shape are formed on the outer circumferential surface of the reduced-diameter section,
the convex curved surface section being brought into pressure contact with the fuel distribution tube, and
the concave curved surface section being located on the enlarged-diameter section side of the convex curved surface section and continuing to the convex curved surface section.

2. The connecting head of a fuel pipe according to claim 1, wherein the convex curved surface section is formed in a spherical shape having a center point on a tube axis of the connecting head.

3. The connecting head of a fuel pipe according to claim 2, wherein when a distance from the center point to the convex curved surface section is defined as AR, and
when a distance from the center point to a point on which a surface passing through a boundary between the convex curved surface section and the concave curved surface section intersects with the tube axis is defined as A in a direction from the center point toward a tip side of the connecting head along the tube axis,
A/AR is 0 or more and less than 1.

4. The connecting head according to any one of claims 1 to 3, wherein in the cross section passing through the tube axis of the connecting head,
when a point of the convex curved surface section abutting against the fuel distribution tube is defined as an abutment point in a state in which the tube axis of the fuel distribution tube and the tube axis of the connecting head coincide with each other,
when a tangential line at the abutment point is defined as a first tangential line, and
when a tangential line of the concave curved surface section parallel to the first tangential line is defined as a second tangential line,
the distance between the first tangential line and the second tangential line is 0 mm or more and 1.14 mm or less.

5. A fuel pipe comprising the connecting head according to any one of claims 1 to 4.
